# FASCICULE DE BREVET EUROPEEN

(11) **EP 2 432 677 B1**
(45) Date de publication et mention de la délivrance du brevet: **16.10.2013**
(21) Numéro de dépôt: 10723698.6
(22) Date de dépôt: 19.04.2010
(51) Int. Cl.: B62D 65/02

(54) **INSTALLATION ET PROCEDE D'ASSEMBLAGE DE COTES D'HABITACLE DE VEHICULES**
ANLAGE UND VERFAHREN ZUR MONTAGE DER SEITENTEILE EINES FAHRZEUGFAHRGASTRAUMS
PLANT AND METHOD FOR ASSEMBLING SIDES OF A VEHICLE PASSENGER COMPARTMENT

(30) Priorité: 19.05.2009 FR 0953345
(43) Date de publication de la demande: 28.03.2012
(73) Titulaire: Peugeot Citroën Automobiles SA, 78140 Vélizy Villacoublay (FR)
(72) Inventeur: EICHMAN, Rubén Dario, La Matanza Buenos Aires 1754 (AR)
(74) Mandataire: Fernandez, Francis Lionel
(86) Numéro de dépôt international: PCT/FR2010/050745
(87) Numéro de publication internationale: WO 2010/133781

(56) Documents cités:
- WO-A1-2008/062033
- DE-A1-102008 008 306
- DE-U1-202005 001 780
- FR-A1- 2 773 092

## Description

La présente invention concerne une installation d'assemblage de côtés d'habitacle de véhicules, notamment de véhicules automobiles. Plus particulièrement, la présente invention concerne une installation permettant de réaliser l'assemblage par soudage de côtés d'habitacle de deux modèles différents de véhicules automobiles. Elle concerne également un procédé en tant que tel, qui utilise une telle installation, unique, pour assembler par soudage des côtés d'habitacle de deux modèles différents de véhicules automobiles.

Elle s'applique sur un sous-ensemble ou ligne de fabrication automobile, au niveau du ferrage où se trouve l'ensemble des opérations qui concernent l'assemblage des éléments de carrosserie issus de l'emboutissage, l'assemblage étant réalisé par des procédés de soudure dans des ateliers différents, dont un est dédié à l'assemblage du soubassement et des côtés d'habitacle des véhicules.

Pour réaliser l'assemblage de carrosseries de modèles différents dans un même atelier ou ligne de fabrication, il est nécessaire de changer les outils des postes à chaque nouveau modèle ou bien de disposer d'autant de lignes de fabrication qu'il y a de modèles.

On a déjà cherché à configurer des stations d'assemblage de pièces de carrosserie pour les rendre adaptables à plusieurs modèles différents, et gagner, de cette façon, de la place et du temps de fabrication.

A titre d'exemple, le document FR 2 909 022 décrit une installation d'assemblage de modèles de carrosserie de véhicules automobiles, qui utilise un système de plateau tournant possédant un nombre N d'outils. Cette installation comporte un autre système de plateau tournant possédant un nombre M d'outils, M étant supérieur ou égal à N, et un robot d'assemblage commun aux deux systèmes de plateau tournant permettant d'assembler les pièces d'au moins N modèles de carrosserie différents, quel que soit l'ordre de fabrication de ces modèles de carrosserie, en maintenant la cadence maximale permise par les caractéristiques du robot et des deux systèmes.

A titre d'exemple également, le document JP 10328884 A2 décrit un système permettant de souder une paire de panneaux symétriques sur une base commune. Sur les positions supérieure et inférieure de la base sont prévus des organes récepteurs. L'organe récepteur inférieur reçoit le panneau de côté gauche, tandis que l'organe récepteur supérieur reçoit le panneau de côté droit. L'organe récepteur supérieur est orientable par basculement vers une position de retrait et, dans cette position de retrait, est plus bas que l'organe récepteur inférieur. Quand le panneau de côté gauche est soudé, l'organe récepteur supérieur est tourné vers la position de retrait par un cylindre d'entraînement, avec le panneau de côté gauche placé sur l'organe récepteur inférieur.

Le document US 6 435 397 B2 décrit une autre solution connue de l'art antérieur. Selon ce document, différents robots sont positionnés sur un plateau tournant et transportent des pièces à assembler entre des stations de travail situées autour du plateau tournant. Chaque robot peut transporter une pièce d'une station de travail à la station voisine. La rotation du plateau tournant déplace le robot d'une station de travail à la station suivante. Chaque robot peut être déplacé indépendamment des autres robots, par rapport à ces derniers et par rapport également au plateau tournant. Chaque robot peut comporter un poste de soudure pour traiter les pièces en dehors des stations de travail ou pendant son déplacement entre ces dernières. Chaque robot peut porter plusieurs pièces de configurations différentes entre les stations de travail.

Enfin, un autre exemple est constitué par le document US 7 442 899 B2, qui décrit un système de préhension de pièces de carrosserie, en particulier de pièces constitutives d'un côté d'habitacle de véhicule automobile, qui présente une bride de serrage ou de fixation. Le système présente un ou plusieurs dispositifs de préhension. Chaque dispositif présente une structure en forme de cadre ou châssis avec des organes de serrage fixes et des organes de serrage mobiles à l'intérieur du châssis. Les organes de serrage ont une configuration en forme de bande et sont adaptés à la course de la bride de fixation. De plus, le système comprend un dispositif de réglage qui fait avancer les organes de serrage mobiles vers la bride et les actionne ensemble ou séquentiellement. Ce système est destiné à permettre des opérations de soudage sur la périphérie du côté d'habitacle.

Une installation d'assemblage de côtés d'habitacle de deux modèles différents et le procédé correspondant respectivement décrits dans le préambule des revendications 1 et 9 sont connus de WO 2008/062033 A1.

Le but de la présente invention est de fournir une nouvelle installation d'assemblage de côtés d'habitacle de véhicules, notamment de véhicules automobiles, qui permette de réaliser l'assemblage par soudage de côtés d'habitacle de deux modèles différents de véhicules automobiles avec un moyen simple pour passer sur cette installation unique d'un modèle de côté d'habitacle à l'autre.

Un autre but de la présente invention est de fournir une telle installation d'assemblage, qui soit plus ergonomique que les installations similaires connues de l'art antérieur, qui permette un gain de temps d'assemblage des cotés d'habitacles des deux modèles et qui présente une grande flexibilité dans la séquence de passage d'un modèle à l'autre sur la ligne de fabrication.

Enfin, c'est aussi un but de la présente invention de fournir une telle installation et un procédé d'assemblage de côtés d'habitacle de deux modèles différents de véhicules automobiles, qui soient de conception et de mise en oeuvre simple, qui soient économiques, en particulier en main d'oeuvre, en matériels de positionnement, de serrage, de soudure et en services d'énergie et d'eau.

Pour parvenir à ces buts, la présente invention a pour objet une installation d'assemblage de côtés d'habitacle de deux modèles différents de véhicules, en particulier de véhicules automobiles, les deux modèles de côtés d'habitacle présentant une partie avant de configuration identique prolongée par une partie arrière spécifique pour chacun des deux modèles, et cette nouvelle installation comporte un plateau tournant, sensiblement horizontal, supportant les parties avant de côtés d'habitacle, des moyens d'assemblage desdites parties avant, et deux stations d'assemblage de parties arrière, situées de part et d'autre du plateau tournant et destinées chacune à l'assemblage des parties arrière de côtés d'habitacle spécifiques d'un seul modèle de véhicule.

Des moyens sont prévus pour déplacer en rotation le plateau tournant entre une première position du plateau en coïncidence avec la première station d'assemblage pour l'assemblage d'un côté d'habitacle d'un premier modèle et une seconde position du plateau en coïncidence avec la seconde station d'assemblage pour l'assemblage d'un côté d'habitacle d'un second modèle.

Ces moyens pour déplacer en rotation le plateau tournant comportent des moyens de commande d'un mouvement de rotation de type moteur électrique et des moyens de transmission mécanique dudit mouvement de rotation au plateau tournant de type pignon et couronne dentée.

Des moyens sont prévus pour immobiliser le plateau tournant dans ladite première position et dans ladite seconde position, qui sont constitués, de préférence, par des coulisseaux mobiles qui viennent s'insérer dans des encoches solidaires du plateau tournant.

De préférence, le mouvement des coulisseaux mobiles dans les encoches du plateau tournant est actionné par des cylindres pneumatiques.

Les parties avant des côtés d'habitacle sont positionnées et fixées sur le plateau tournant, de manière connue en soi, au moyen d'organes de serrage pneumatiques.

Les parties avant des côtés d'habitacle sont formées, chacune, par la partie de porte avant et le pied central du côté d'habitacle, et les parties arrière sont formées, chacune, par la partie du côté d'habitacle située à l'arrière du pied central, c'est-à-dire vers l'arrière du véhicule.

Le plateau tournant est avantageusement monté sur des billes de roulement, elles mêmes montées sur un socle récepteur du plateau tournant.

La présente invention a également pour objet un procédé d'assemblage de côtés d'habitacle de deux modèles différents de véhicules, en particulier de véhicules automobiles, les deux modèles de côtés d'habitacle présentant une partie avant de configuration identique prolongée par une partie arrière spécifique pour chacun des deux modèles, et ce nouveau procédé comporte les étapes suivante, prises en combinaison :
- l'opérateur charge, au moyen d'un manipulateur, un côté d'habitacle d'un premier modèle sur le plateau tournant d'une installation conforme à celle décrite ci-dessus dans ses grandes lignes, et immobilise ledit plateau tournant dans une première position en coïncidence avec la première station d'assemblage pour réaliser l'assemblage par soudage dudit côté d'habitacle d'un premier modèle,
- les opérations d'assemblage par soudage sont réalisées sur la partie avant et la partie arrière du côté d'habitacle du premier modèle,
- si le côté d'habitacle suivant est d'un modèle différent, l'opérateur commande la rotation du plateau tournant de 180° environ et immobilise ledit plateau tournant dans une seconde position en coïncidence avec la seconde station d'assemblage pour réaliser l'assemblage par soudage dudit côté d'habitacle d'un second modèle, et
- les opérations d'assemblage par soudage sont réalisées sur la partie avant et la partie arrière du côté d'habitacle du second modèle.

Ce procédé s'applique, de préférence, à une ligne de fabrication de cadence relativement basse, de l'ordre de 16 véhicules par heure.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 représente, de manière schématique, un côté d'habitacle d'un premier modèle de véhicule en position d'assemblage sur une installation conforme à la présente invention,
- la figure 2 représente, de manière schématique, un côté d'habitacle d'un second modèle de véhicule en position d'assemblage sur l'installation de la figure 1,
- la figure 3 représente un exemple de moyens pour déplacer en rotation le plateau tournant,
- la figure 4 représente un exemple de moyens d'immobilisation du plateau tournant dans une première et une seconde position d'assemblage, selon le modèle de côté d'habitacle concerné,
- la figure 5 est une vue de dessous des moyens d'immobilisation de la figure 4,
- la figure 6 est une vue des éléments mécaniques situés sous le plateau tournant de l'installation selon l'invention, et
- la figure 7 est une vue en perspective de l'axe de rotation du moyen de rotation du plateau tournant.

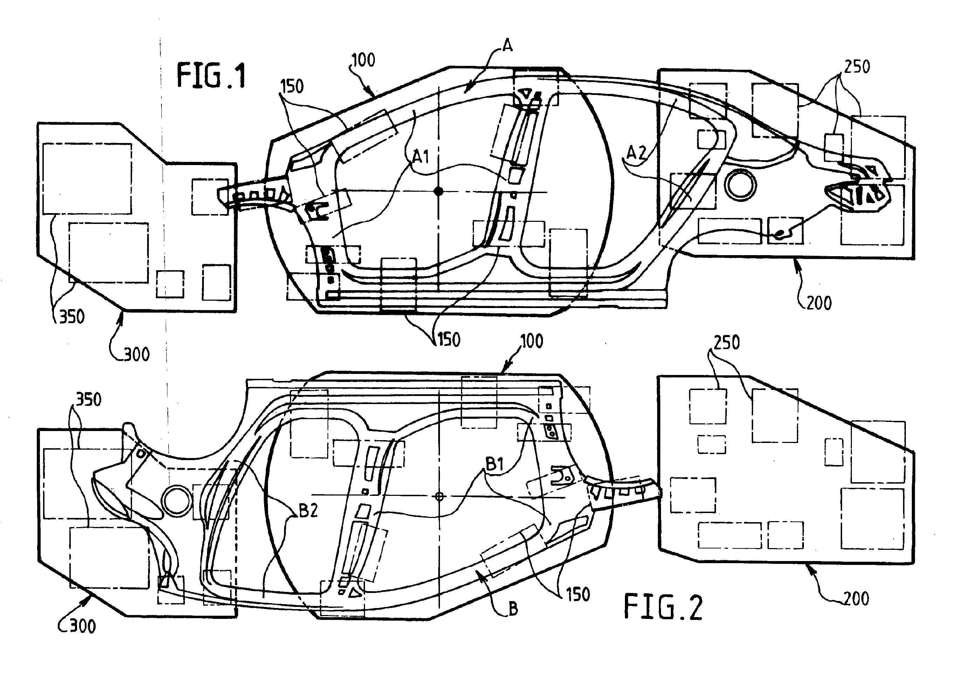

En référence aux dessins des figure 1 et 2, on a représenté, de manière schématique, les différentes parties d'une installation d'assemblage de côtés d'habitacle selon la présente invention.

L'installation comporte :
- une partie centrale tournante dans un plan sensiblement horizontal, appelée « plateau tournant » dans la suite du texte et désignée par la référence générale 100, destinée à supporter la partie avant d'un côté d'habitacle,
- une première table - ou station - d'assemblage 200, destinée à supporter la partie arrière d'un côté d'habitacle d'un premier modèle de véhicule, et
- une seconde station d'assemblage 300, destinée à supporter la partie arrière d'un côté d'habitacle d'un autre modèle de véhicule.

Dans le présente texte, on appelle « partie avant » du côté d'habitacle, la partie comprenant la partie de porte avant et le pied central, et « partie arrière » du côté d'habitacle la partie située à l'arrière du pied central vers l'arrière du véhicule.

Sur la figure 1, un côté d'habitacle, de référence générale A, d'un modèle de véhicule automobile à coffre est placé sur l'installation d'assemblage. La partie avant A1 du côté d'habitacle A est supportée par le plateau tournant 100 et la partie arrière A2 du même côté d'habitacle A est supportée par la station d'assemblage 200. Afin de réaliser les opérations de soudage sur le côté d'habitacle A, le plateau tournant 100 est placé en position de coïncidence avec la station d'assemblage 200. Un opérateur d'assemblage charge le cadre de côté d'habitacle au moyen d'un robot manipulateur non représenté, les pièces autres que le cadre sont chargées sur le plateau tournant 100 et sur la station d'assemblage 200. Des moyens de commande sont prévus sur l'installation pour fermer les brides de serrage, les porte-pilote et les abattants, tous moyens de fixation non décrits en détails, représentés en traits fins sur les figures 1 et 2 et désignés par les références 150 sur le plateau tournant et 250 sur la station d'assemblage 200.

En référence à la figure 2, pour réaliser les mêmes opérations d'assemblage par soudage d'un côté d'habitacle différent, de référence générale B, appartenant à un modèle différent de véhicule automobile sans coffre, le plateau tournant est tourné d'environ 180° dans son plan horizontal, de telle sorte qu'il vient en coïncidence avec la seconde station d'assemblage 300. La partie avant B1 du côté d'habitacle B est supportée, comme pour le côté d'habitacle A du premier modèle, par le plateau tournant 100, mais la partie arrière B2 du côté d'habitacle B est supportée par la station d'assemblage 300. Ainsi, afin de réaliser les opérations de soudage sur le côté d'habitacle B, le plateau tournant 100 a été placé, par rotation, en position de coïncidence avec la station d'assemblage 300. De la même façon que précédemment pour le côté d'habitacle A, un opérateur d'assemblage charge le cadre de côté d'habitacle B au moyen d'un robot manipulateur non représenté, les pièces autres que le cadre sont chargées sur le plateau tournant 100 et sur la station d'assemblage 300. Les moyens de commande, qui sont prévus sur l'installation, activent la fermeture des brides de serrage, des porte-pilote et des abattants, tous moyens de fixation non décrits en détails, représentés en traits fins sur les figures 1 et 2 et désignés par les références 150 sur le plateau tournant 100 et 350 sur la station d'assemblage 300.

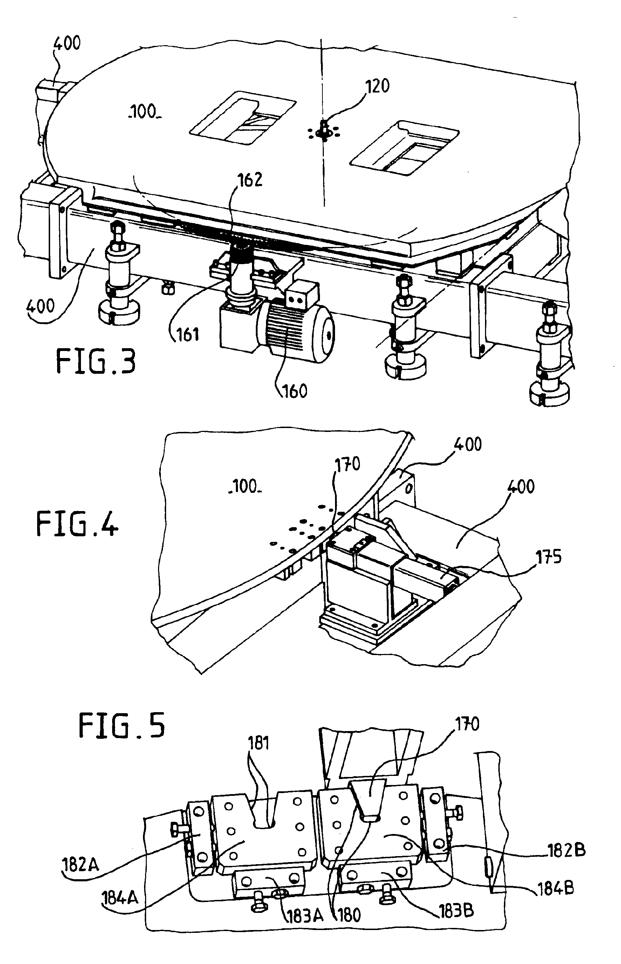

En référence au dessin de la figure 3, le plateau tournant 100 est entraîné en rotation, autour de son axe de rotation sensiblement vertical 120, entre les deux positions d'assemblage correspondant aux deux modèles de côtés d'habitacle par des moyens de déplacement en rotation, qui comportent des moyens de commande d'un mouvement de rotation de type moteur électrique ou moto réducteur 160 et des moyens de transmission mécanique du mouvement de rotation du plateau tournant 100 qui sont de type pignon 161 et couronne dentée 162.

La référence 400 désigne le bâti dans son ensemble, formé de poutres creuses sensiblement horizontales, sur lequel sont montés le plateau tournant 100 et les stations d'assemblage 200 et 300.

Des moyens sont prévus pour immobiliser le plateau tournant 100 dans la première position d'assemblage (position de la figure 1) et la seconde position d'assemblage (position de la figure 2). Ces moyens d'immobilisation sont constitués par deux coulisseaux mobiles 170 (un seul des deux coulisseaux est représenté sur la figure 4), sensiblement diamétralement opposés de part et d'autre du plateau tournant 100. Ces coulisseaux viennent s'insérer respectivement dans des encoches 180, 181 solidaires du plateau tournant 100, comme montré sur la figure 5. Les encoches 180, 181 sont réalisées dans des porte-encoche 184B, 184A, respectivement, qui peuvent être réglés en position (longitudinale et transversale) grâce à des pavés de réglage à vis 182B, 183B et 182A, 183A, respectivement.

Le mouvement des coulisseaux mobiles 170 dans les encoches respectives du plateau tournant 100 est actionné par des cylindres pneumatiques 175.

Les parties avant A1, B1 des côtés d'habitacle A, B, respectivement, sont positionnées et fixées sur le plateau tournant 100, de préférence au moyen d'organes de serrage pneumatiques.

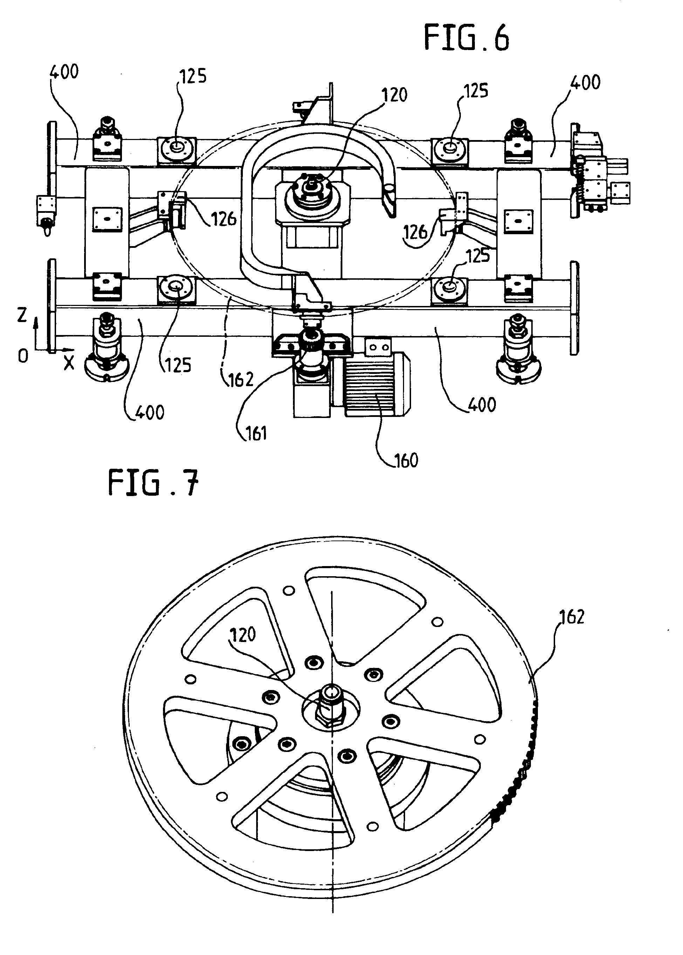

L'axe de rotation, référencé 120, du plateau tournant 100 est représenté sur le dessin de la figure 6. Sous le plateau tournant 100, se trouvent également une chaîne porte câbles et des paliers de support à billes de roulement 125, qui sont montés sur le bâti 400 et supportent le plateau tournant 100. Des guides 126 permettent de contrôler le centrage de l'axe 120.

L'axe de rotation 120 du plateau tournant 100 est mieux représenté sur le dessin de la figure 7.

Le fonctionnement de l'installation décrite ci-dessus est le suivant :
- l'opérateur charge, au moyen d'un manipulateur, un côté d'habitacle A d'un premier modèle sur le plateau tournant 100 immobilisé dans une première position, telle que celle illustrée par la figure 1, en coïncidence avec la première station d'assemblage 200 pour réaliser l'assemblage par soudage du côté d'habitacle A,
- les opérations d'assemblage par soudage sont réalisées sur la partie avant A1 et la partie arrière A2 du côté d'habitacle A,
- si le côté d'habitacle suivant est un côté d'habitacle B d'un modèle différent, l'opérateur commande la rotation du plateau tournant 100 (de 180° environ) et l'immobilise dans une seconde position en coïncidence avec la seconde station d'assemblage 300 pour réaliser l'assemblage par soudage du côté d'habitacle B, et
- les opérations d'assemblage par soudage sont réalisées sur la partie avant B1 et la partie arrière B2 dudit côté d'habitacle B du second modèle.

Ce procédé s'applique avantageusement à une ligne de fabrication de cadence relativement basse, de l'ordre de 16 véhicules par heure.

L'installation d'assemblage décrite ci-dessus présente les avantages suivants :
- elle permet d'avoir une ligne de sous-ensemble complète, c'est-à-dire comprenant toutes les alimentations requises en eau, en air, en énergie, et tous les matériels de soudage et de fabrication nécessaires, qui est avantageusement utilisée pour réaliser un second modèle de sous-ensemble de carrosserie simplement en plaçant les dispositifs de soudure selon la présente invention,
- elle améliore l'ergonomie et le temps de travail du poste d'assemblage,
- elle évite de recourir à une fosse, comme cela est le cas avec des installations connues de l'art antérieur à pivotement autour d'un axe horizontal,
- elle permet d'effectuer l'assemblage des deux modèles de côtés d'habitacle en alternance d'une manière très flexible (notion de « mix de fabrication » flexible), c'est-à-dire par exemple N côtés d'habitacle d'un premier modèle et 16 - N d'un second modèle avec toutes les combinaisons possibles de N de 0 à 16.

Bien entendu, la présente invention n'est pas limitée au mode de réalisation décrit et représenté ci-dessus à titre d'exemple ; d'autres modes de réalisation peuvent être conçus par l'homme de métier sans sortir du cadre et de la portée de la présente invention, tels que définis par les reven-dications.

## Revendications

1. Installation d'assemblage de côtés d'habitacle de deux modèles différents de véhicules, en particulier de véhicules automobiles, les deux modèles de côtés d'habitacle (A, B) présentant une partie avant (A1, B1) de configuration identique prolongée par une partie arrière (A2, B2) spécifique pour chacun des deux modèles, **caractérisée en ce qu'**elle comporte un plateau tournant (100), sensiblement horizontal, supportant les parties avant (A1, B1) de côtés d'habitacle (A, B), des moyens d'assemblage desdites parties avant (A1, B1), et deux stations d'assemblage (200, 300) de parties arrière (A2, B2), situées de part et d'autre du plateau tournant (100) et destinées chacune à l'assemblage des parties arrière (A2, B2) de côtés d'habitacle spécifiques d'un seul modèle de véhicule.

2. Installation selon la revendication 1, **caractérisée en ce que** des moyens sont prévus pour déplacer en rotation le plateau tournant (100) entre une première position du plateau en coïncidence avec la première station d'assemblage (200) pour l'assemblage d'un côté d'habitacle (A) d'un premier modèle et une seconde position du plateau tournant (100) en coïncidence avec la seconde station d'assemblage (300) pour l'assemblage d'un côté d'habitacle (B) d'un second modèle.

3. Installation selon la revendication 2, **caractérisée en ce que** lesdits moyens pour déplacer en rotation le plateau tournant (100) comportent des moyens de commande d'un mouvement de rotation de type moteur électrique (160) et des moyens de transmission mécanique dudit mouvement de rotation au plateau tournant (100) de type pignon (161) et couronne dentée (162).

4. Installation selon l'une quelconque des revendications 2 et 3, **caractérisée en ce que** des moyens sont prévus pour immobiliser le plateau tournant (100) dans ladite première et ladite seconde position, qui sont constitués par des coulisseaux mobiles (170) qui viennent s'insérer dans des encoches (180, 181) solidaires du plateau tournant (100).

5. Installation selon la revendication 4, **caractérisée en ce que** le mouvement desdits coulisseaux mobiles (170) dans lesdites encoches (180, 181) du plateau tournant (100) est actionné par des cylindres pneumatiques (175).

6. Installation selon la revendication 1, **caractérisée en ce que** les parties avant (A1, B1) des côtés d'habitacle (A, B) sont positionnées et fixées sur le plateau tournant (100) au moyen d'organes de serrage pneumatiques.

7. Installation selon la revendication 1, **caractérisée en ce que** lesdites parties avant (A1, B1) des côtés d'habitacle (A, B) sont formées, chacune, par la partie de porte avant et le pied central du côté d'habitacle, et lesdites parties arrière (A2, B2) sont formées, chacune, par la partie du côté d'habitacle située à l'arrière du pied central.

8. Installation selon la revendication 1, **caractérisée en ce que** le plateau tournant (100) est monté sur des billes de roulement (125), elle mêmes montées sur un socle faisant partie d'un bâti (400) supportant l'installation.

9. Procédé d'assemblage de côtés d'habitacle de deux modèles différents de véhicules, en particulier de véhicules automobiles, les deux modèles de côtés d'habitacle (A, B) présentant une partie avant (A1, B1) de configuration identique prolongée par une partie arrière (A2, B2) spécifique pour chacun des deux modèles, **caractérisée par** les étapes suivante, prises en combinaison :
- l'opérateur charge, au moyen d'un manipulateur, un côté d'habitacle (A) d'un premier modèle sur le plateau tournant (100) d'une installation conforme à l'une quelconque des revendications précédentes, et immobilise ledit plateau tournant (100) dans une première position en coïncidence avec la première station d'assemblage (200) pour réaliser l'assemblage par soudage dudit côté d'habitacle (A) d'un premier modèle,
- les opérations d'assemblage par soudage sont réalisées sur la partie avant (A1) et la partie arrière (A2) du côté d'habitacle (A) du premier modèle,
- si le côté d'habitacle suivant est d'un modèle différent (B), l'opérateur commande la rotation du plateau tournant (100) de 180° environ et immobilise ledit plateau tournant (100) dans une seconde position en coïncidence avec la seconde station d'assemblage (300) pour réaliser l'assemblage par soudage dudit côté d'habitacle (B) d'un second modèle, et
- les opérations d'assemblage par soudage sont réalisées sur la partie avant (B1) et la partie arrière (B2) du côté d'habitacle (B) du second modèle.

10. Procédé selon la revendication 9, **caractérisé en ce qu'**il s'applique à une ligne de fabrication de cadence relativement basse, de l'ordre de 16 véhicules par heure.

## Patentansprüche

1. Anlage zum Zusammenfügen von Fahrgastzellenseiten zweier unterschiedlicher Fahrzeugmodelle, insbesondere von Kraftfahrzeugen, wobei die zwei Fahrgastzellenseitenmodelle (A, B) einen Vorderteil (A1, B1) mit identischer Konfiguration aufweisen, der durch einen Heckteil (A2, B2) verlängert wird, der für jedes der zwei Modelle spezifisch ist, **dadurch gekennzeichnet, dass** sie eine Drehplatte (100) aufweist, die im Wesentlichen horizontal ist, die die Fahrgastzellenseiten (A, B)-Vorderteile (A1, B1) trägt, Mittel zum Zusammenfügen der Vorderteile (A1, B1), und zwei Fügestationen (200, 300) von hinteren Teilen (A2, B2), die zu beiden Seiten der Drehplatte (100) liegen und jeweils zum Zusammenfügen der spezifischen Fahrgastzellenseiten-Heckteile (A2, B2) eines einzigen Fahrzeugmodells bestimmt sind.

2. Anlage nach Anspruch 1, **dadurch gekennzeichnet, dass** die Mittel vorgesehen sind, um die dritte Platte (100) in Drehung zwischen einer ersten Position der Platte deckungsgleich mit der ersten Fügestation (200) für das Zusammenfügen einer Fahrgastzellenseite (A) eines ersten Modells und einer zweiten Position der Drehplatte (100) deckungsgleich mit der zweiten Fügestation (300) für das Zusammenfügen einer Fahrgastzellenseite (B) eines zweiten Modells zu verlagern.

3. Anlage nach Anspruch 2, **dadurch gekennzeichnet, dass** die Mittel zum Verlagern in Drehung der Drehplatte (100) Steuermittel einer Drehbewegung des Typs Elektromotor (160) und Mittel zur mechanischen Übertragung der Drehbewegung auf die Drehplatte (100) des Typs Ritzel (161) und Zahnkranz (162) aufweisen.

4. Anlage nach einem der Ansprüche 2 und 3, **dadurch gekennzeichnet, dass** die Mittel vorgesehen sind, um die Drehplatte (100) in der ersten und der zweiten Position stillzustellen, die aus beweglichen Gleitführungen (170) bestehen, die sich in Kerben (180, 181), die fest mit der Drehplatte (100) verbunden sind, einfügen.

5. Anlage nach Anspruch 4, **dadurch gekennzeichnet, dass** die Bewegung der beweglichen Gleitführungen (170) in den Kerben (180, 181) der Drehplatte (100) durch pneumatische Zylinder (175) betätigt wird.

6. Anlage nach Anspruch 1, **dadurch gekennzeichnet, dass** die Vorderteile (A1, B1) der Fahrgastzellenseiten (A, B) auf der Drehplatte (100) mittels pneumatischer Spannorgane positioniert und befestigt sind.

7. Anlage nach Anspruch 1, **dadurch gekennzeichnet, dass** die Vorderteile (A1, B1) der Fahrgastzellenseiten (A, B) jeweils durch den Vordertürteil und den zentralen Ständer der Fahrgastzellenseite ausgebildet sind, und dass die Heckteile (A2, B2) jeweils durch den Teil der Fahrgastzellenseite, der sich hinter dem zentralen Ständer befindet, ausgebildet sind.

8. Anlage nach Anspruch 1, **dadurch gekennzeichnet, dass** die Drehplatte (100) auf Kugellagerkugeln (125) montiert ist, die selbst auf einem Sockel montiert sind, der Teil eines Aufbaus (400), das die Anlage trägt, ist.

9. Verfahren zum Zusammenfügen von Fahrgastzellenseiten zweier unterschiedlicher Fahrzeugmodelle, insbesondere von Kraftfahrzeugen, wobei die zwei Fahrgastzellenseiten (A, B) einen Vorderteil (A1, B1) mit identischer Konfiguration, der durch einen Heckteil (A2, B2) verlängert wird, der für jedes der zwei Modelle charakteristisch ist, aufweisen, **gekennzeichnet durch** die folgenden Schritte, kombiniert genommen:
- der Bediener lädt mittels eines Handhabungsgeräts eine Fahrgastzellenseite (A) eines ersten Modells auf die Drehplatte (100) einer Anlage, die einem der vorhergehenden Ansprüche entspricht, und stellt die Drehplatte (100) in einer ersten Position deckungsgleich mit der ersten Fügestation (200) fest, um das Zusammenfügen durch Schweißen der Fahrgastzellenseite (A) eines ersten Modells auszuführen,
- die Fügevorgänge **durch** Schweißen werden auf dem vorderen Teil (A1) und auf dem hinteren Teil (A2) der Fahrgastzellenseite (A) des ersten Modells ausgeführt,
- wenn die darauf folgende Fahrgastzellenseite ein unterschiedliches Modell (B) ist, steuert der Bediener die Drehung der Drehplatte (100) um etwa 180° und stellt die Drehplatte (100) in einer zweiten Position deckungsgleich mit der zweiten Fügestation (300) fest, um das Fügen **durch** Schweißen der Fahrgastzellenseite (B) eines zweiten Modells auszuführen, und
- die Fügevorgänge **durch** Schweißen werden auf dem Vorderteil (B1) und dem Heckteil (B2) der Fahrgastzellenseite (B) des zweiten Modells ausgeführt.

10. Verfahren nach Anspruch 9, **dadurch gekennzeichnet, dass** es für eine Fertigungslinie mit relativ niedrigem Arbeitstakt in der Größenordnung von 16 Fahrzeugen pro Stunde gilt.

## Claims

1. A plant for assembling passenger compartment sides of two different models of vehicles, in particular of motor vehicles, the two models of passenger compartment sides (A, B) having a front portion (A1, B1) with an identical configuration that extends by a rear portion (A2, B2) that is specific to each of the two models, **characterized in that** it comprises a substantially horizontal rotary plate (100) supporting the front portions (A1, B1) of passenger compartment sides (A, B), means for assembling said front portions (A1, B1), and two assembling stations (200, 300) of rear portions (A2, B2), situated on either side of the rotary plate (100) and each intended for the assembling of the rear portions (A2, B2) of specific passenger compartment sides of a single vehicle model.

2. The plant according to Claim 1, **characterized in that** means are provided for moving in rotation the rotary plate (100) between a first position of the plate in coincidence with the first assembling station (200) for the assembling of a passenger compartment side (A) of a first model and a second position of the rotary plate (100) in coincidence with the second assembling station (300) for the assembling of a passenger compartment side (B) of a second model.

3. The plant according to Claim 2, **characterized in that** the said means for moving in rotation the rotary plate (100) comprise control means of a rotation movement of electric motor type (160) and means for mechanical transmission of the said rotation movement to the rotary plate (100) of pinion (161) and ring gear (162) type.

4. The plant according to any one of Claims 2 and 3, **characterized in that** means are provided for immobilizing the rotary plate (100) in the said first and the said second position, which are constituted by movable slides (170) which come to be inserted in slots (180, 181) which are integral with the rotary plate (100).

5. The plant according to Claim 4, **characterized in that** the movement of the said movable slides (170) in the said slots (180, 181) of the rotary plate (100) is actuated by pneumatic cylinders (175).

6. The plant according to Claim 1, **characterized in that** the front portions (A1, B1) of the passenger compartment sides (A, B) are positioned and fixed on the rotary plate (100) by means of pneumatic clamping members.

7. The plant according to Claim 1, **characterized in that** the said front portions (A1, B1) of the passenger compartment sides (A, B) are each formed by the front door portion and central pillar of the passenger compartment side, and the said rear portions (A2, B2) are each formed by the portion of the passenger compartment side situated at the rear of the central pillar.

8. The plant according to Claim 1, **characterized in that** the rotary plate (100) is mounted on ball bearings (125) which themselves are mounted on a base forming part of a frame (400) supporting the plant.

9. A method for assembling passenger compartment sides of two different models of vehicles, in particular of motor vehicles, the two models of passenger compartment sides (A, B) having a front portion (A1, B1) with an identical configuration that extends by a rear portion (A2, B2) that is specific to each of the two models, **characterized by** the following steps, taken in combination:
- the operator loads, by means of a manipulator, a passenger compartment side (A) of a first model on the rotary plate (100) of a plant according to any one of the preceding claims, and immobilizes the said rotary plate (100) in a first position in coincidence with the first assembling station (200) to realize the assembling by welding of the said passenger compartment side (A) of a first model,
- the assembling operations by welding are realized on the front portion (A1) and the rear portion (A2) of the passenger compartment side (A) of the first model,
- if the next passenger compartment side is of a different model (B), the operator controls the rotation of the rotary plate (100) by approximately 180° and immobilizes the said rotary plate (100) in a second position in coincidence with the second assembling station (300) to realize the assembling by welding of the said passenger compartment side (B) of a second model, and
- the operations of assembling by welding are realized on the front portion (B1) and the rear portion (B2) of the passenger compartment side (B) of the second model.

10. The method according to Claim 9, **characterized in that** it is applied to an assembly line of relatively low speed, in the order of 16 vehicles per hour.
